# EUROPEAN PATENT APPLICATION

(11) **EP 4 567 073 A1**
(43) Date of publication of application: **11.06.2025**
(21) Application number: 23849850.5
(22) Date of filing: 12.07.2023
(51) Int. Cl.: C08L 83/04, C08K 3/22, C08K 3/36, C08K 5/5435, C08L 83/05, C08L 83/07, G02B 5/02

(54) **LIGHT-DIFFUSING SILICONE COMPOSITION, AND LIGHT-DIFFUSING MATERIAL**

(30) Priority: 01.08.2022 JP 2022122708
(71) Applicant: Dow Toray Co., Ltd., Tokyo 140-8617 (JP)
(72) Inventor: AMAKO, Masaaki, Ichihara-shi Chiba 299-0108 (JP)
(74) Representative: Murgitroyd & Company
(86) International application number: PCT/JP2023/025657
(87) International publication number: WO 2024/029291

(57) **Abstract**

PROBLEM

To provide a light-diffusing silicone composition in which settling and separation of a spherical inorganic light-diffusing agent is suppressed over an extended period of time, and which, when the organopolysiloxane has a silicon atom-bonded alkenyl group, is curable with an organohydrogenpolysiloxane in the presence of a hydrosilylation reaction catalyst to form a cured product having excellent light diffusivity and heat resistance upon curing.

RESOLUTION MEANS

A light-diffusing silicone composition, including: (A) an organopolysiloxane having a viscosity at 25°C of 100 to 1,000,000 mPa·s; (B) a spherical inorganic light-diffusing agent having an average particle size of 1 to 10 µm; and (C) a silica filler having a specific surface area as measured by the BET method of at least 50 m²/g, wherein the aforementioned component (C) is a silica filler which has been surface-treated in advance with hexamethyldisilazane, or a silica filler which has been surface-treated with hexamethyldisilazane in the presence of a part or all of the aforementioned component (A).

## Description

### TECHNICAL FIELD

The present invention relates to a light-diffusing silicone composition and a light-diffusing material obtained by curing the same.

### BACKGROUND ART

In lighting and LCD backlights, light-diffusing materials are used to uniformly diffuse light from a light source and increase illuminance. Silicone compositions that form this light-diffusing material are known. For example, Patent Document 1 describes a curable silicone composition that includes: a resinous organopolysiloxane having at least two silicon atom-bonded alkenyl groups in a molecule; a linear organopolysiloxane having at least two silicon atom-bonded alkenyl groups in a molecule; an organohydrogenpolysiloxane having at least two silicon atom-bonded hydrogen atoms in a molecule; a hydrosilylation reaction catalyst; and fumed silica having a specific surface area of 150 m²/g or more as measured by the BET method. The document also indicates that the fumed silica may be surface-treated in advance with hexamethyldisilazane.

Furthermore, Patent Document 2 discloses a light-diffusing silicone rubber composition obtained by adding, as a light-diffusing agent, fine glass beads having an average particle size of 1 to 150 µm to a transparent or translucent uncrosslinked dimethylsilicone rubber compound including: a dimethylpolysiloxane having at least two silicon atom-bonded alkenyl groups in a molecule; one or more inorganic filler selected from surface-hydrophobization-treated or untreated fumed silica, calcium carbonate or other reinforcing or non-reinforcing inorganic fillers, and titanium oxide, zinc oxide, aluminum oxide and other thermally conductive inorganic fillers; and a wetter such as diphenylsilanediol, an organosiloxane oligomer blocked with silanol groups at both molecular chain ends, or the like.

Furthermore, Patent Document 3 discloses a curable silicone composition including: a linear organopolysiloxane having at least two silicon atom-bonded alkenyl groups in a molecule; a resinous organopolysiloxane having at least one silicon atom-bonded alkenyl group in a molecule; an organohydrogenpolysiloxane having at least two silicon atom-bonded hydrogen atoms in a molecule; a hydrosilylation reaction catalyst; and true-spherical silica having an average particle size of 0.2 to 10 µm.

**In** recent years, there have been studies into the use of spherical light-diffusing agents, such as alumina and the like, as the light diffusing agent in light-diffusing silicone compositions in order to improve the light-diffusivity and light transmittance. However, when such a silicone composition is stored over an extended period of time, there is a problem where the aforementioned light-diffusing agent settles and separates, and the properties of the light-diffusing material obtained by curing the composition cannot be fully exhibited.

On the other hand, it is known that in thermally conductive silicone rubber compositions including a large amount of thermally conductive fillers, such as alumina or the like, a silica filler can be added to improve the properties of the composition. For example, Patent Document 4 describes a thermally conductive silicone composition including an organopolysiloxane, an alumina filler, a silica filler with a surface that has been hydrophobized with hexamethyldisilazane, an organopolysiloxane having a silicon atom-bonded alkoxy group, and an alkoxysilane compound having an epoxy group, and this composition is less likely to slip down even when applied to a vertical surface.

However, in light-diffusing silicone compositions, the amount of the light-diffusing agent, such as alumina or the like, blended is extremely small compared to thermally conductive silicone compositions in order to avoid reducing the light transmittance. Furthermore, in thermally conductive silicone compositions, the balance between light diffusivity and light transmittance is of no concern, making it difficult to apply technical means used in thermally conductive silicone compositions to light-diffusing silicone compositions.

### RELATED ART DOCUMENTS

### Patent Documents

Patent Document 1: Japanese Unexamined Patent Application 2010-018662
Patent Document 2: Japanese Unexamined Patent Application 2012-167253
Patent Document 3: Japanese Unexamined Patent Application 2015-129213
Patent Document 4: Japanese Unexamined Patent Application 2009-286855

### SUMMARY OF THE INVENTION

### PROBLEM TO BE SOLVED BY THE INVENTION

An objective of the present invention is to provide: a light-diffusing silicone composition in which settling and separation of a spherical inorganic light-diffusing agent is suppressed over an extended period of time, and which, when the organopolysiloxane has a silicon atom-bonded alkenyl group, is curable with an organohydrogenpolysiloxane in the presence of a hydrosilylation reaction catalyst to form a light-diffusing material having excellent light diffusivity and heat resistance upon curing; and a light-diffusing material having excellent light diffusivity and heat resistance.

### MEANS FOR SOLVING THE PROBLEM

A light-diffusing silicone composition of the present invention includes:
(A) an organopolysiloxane having a viscosity at 25°C of 100 to 1,000,000 mPa·s;
(B) a spherical inorganic light-diffusing agent having an average particle size of 1 to 10 µm; and
(C) a silica filler having a specific surface area as measured by the BET method of at least 50 m²/g, wherein
with respect to the total amount of the aforementioned components (A) to (C), the amount of the aforementioned component (B) is 30 to 85 mass% of the present composition and the amount of the aforementioned component (C) is 0.1 to 5 mass% of the present composition, and the aforementioned component (C) is a silica filler which has been surface-treated in advance with hexamethyldisilazane, or a silica filler which has been surface-treated with hexamethyldisilazane in the presence of a part or all of the aforementioned component (A).

In the abovementioned composition, component (B) is preferably a spherical alumina filler.

The abovementioned composition preferably further includes (D) an organosilane or organosiloxane having, in a molecule, at least one silicon atom-bonded alkoxy group and at least one silicon atom-bonded alkenyl group or at least one epoxy group-containing alkyl group at an amount of 0.1 to 5 mass% with respect to the total amount of the aforementioned components (A) to (C).

In the abovementioned composition, the aforementioned component (A) is an organopolysiloxane having at least two silicon atom-bonded alkenyl groups in a molecule, and
a curable composition can be obtained by further including:
(E) an organohydrogenpolysiloxane having at least two silicon atom-bonded hydrogen atoms in a molecule, at an amount such that there are 0.1 to 10 mols of silicon atom-bonded hydrogen atoms in the present component with respect to 1 mol of alkenyl groups in the aforementioned component (A); and
(F) a catalytic amount of a hydrosilylation reaction catalyst.

The light-diffusing material of the present invention is obtained by curing the abovementioned curable composition.

The light-diffusing material of the present invention preferably has a light transmittance of 40% or more at a wavelength of 550 nm when the material has a thickness of 30 µm.

### EFFECT OF THE INVENTION

The light-diffusing silicone composition of the present invention is characterized in that settling and separation of a spherical inorganic light-diffusing agent is suppressed over an extended period of time, and characterized by being, when the organopolysiloxane has a silicon atom-bonded alkenyl group, curable with an organohydrogenpolysiloxane in the presence of a hydrosilylation reaction catalyst to form a light-diffusing material having excellent light diffusivity and heat resistance upon curing. Furthermore, the light-diffusing material of the present invention is characterized by having excellent light diffusivity and heat resistance.

### DESCRIPTION OF THE PREFERRED EMBODIMENTS

### Definitions of Terms

The term "viscosity" as used in the present specification refers to a value (unit: mPa·s or Pa·s) at 25°C measured using a B-type rotational viscometer in accordance with JIS K 7117-1:1999 "Plastics - Resins in the liquid state or as emulsions or dispersions - Determination of apparent viscosity by the Brookfield Test method".

### <Light-Diffusing Silicone Composition>

First, the light-diffusing silicone composition of the present invention will be described in detail.

Component (A) is an organopolysiloxane having a viscosity at 25°C in the range of 100 to 1,000,000 mPa·s, and preferably 300 to 100,000 mPa·s or 300 to 50,000 mPa·s. This is because if the viscosity at 25°C is less than the lower limit of the abovementioned range, the stability of the resulting silicone composition tends to significantly decrease, whereas if the viscosity exceeds the upper limit of the abovementioned range, the fluidity of the resulting silicone composition tends to significantly decrease. The molecular structure of such component (A) is not limited, and examples thereof include linear, branched, linear with a partial branch, and dendritic structures. Preferably, the molecular structure is linear or linear with a partial branch. Component (A) may be a single polymer having these molecular structures, a copolymer including these molecular structures, or a mixture of these polymers.

When the present composition is cured with an organohydrogenpolysiloxane in the presence of a hydrosilylation reaction catalyst, the aforementioned component (A) is an organopolysiloxane having at least two silicon atom-bonded alkenyl groups in a molecule. Examples of the silicon atom-bonded alkenyl groups in component (A) include alkenyl groups with 2 to 12 carbon atoms, such as vinyl groups, allyl groups, butenyl groups, pentenyl groups, hexenyl groups, and the like, with vinyl groups being preferred. Furthermore, examples of groups bonded to silicon atoms other than alkenyl groups in component (A) include: methyl groups, ethyl groups, propyl groups, butyl groups, pentyl groups, hexyl groups, and other alkyl groups with 1 to 12 carbon atoms; cyclopentyl groups, cyclohexyl groups, and other cycloalkyl groups with 5 to 12 carbon atoms; phenyl groups, tolyl groups, xylyl groups, and other aryl groups with 6 to 12 carbon atoms; benzyl groups, phenethyl groups, and other aralkyl groups with 7 to 12 carbon atoms; and 3,3,3-trifluoropropyl groups, 3-chloropropyl groups, and other halogenated alkyl groups with 1 to 12 carbon atoms. Alkyl groups and aryl groups are preferred, and methyl groups and phenyl groups are particularly preferred. Note that the present composition is cured by a hydrosilylation reaction. Therefore, when the composition includes an organohydrogenpolysiloxane, component (A) does not have a silicon atom-bonded hydrogen atom, and when the present composition includes component (D), which will be described below, the composition does not have a silicon atom-bonded alkoxy group or epoxy group-containing alkyl group.

Examples of such organopolysiloxanes of component (A) include: dimethylpolysiloxanes blocked with dimethylvinylsiloxy groups at both molecular chain ends, dimethylpolysiloxanes blocked with methylphenylvinylsiloxy groups at both molecular chain ends, dimethylsiloxane-methylphenylsiloxane copolymers blocked with dimethylvinylsiloxy groups at both molecular chain ends, dimethylsiloxane-methylvinylsiloxane copolymers blocked with dimethylvinylsiloxy groups at both molecular chain ends, dimethylsiloxane-methylvinylsiloxane copolymers blocked with trimethylsiloxy groups at both molecular chain ends, methyl(3,3,3-trifluoropropyl)polysiloxanes blocked with dimethylvinylsiloxy groups at both molecular chain ends, dimethylsiloxane-methylvinylsiloxane copolymers blocked with silanol groups at both molecular chain ends, dimethylsiloxane-methylvinylsiloxane-methylphenylsiloxane copolymers blocked with silanol groups at both molecular chain ends, and copolymers including a siloxane unit expressed by the formula: (CH₃)₃SiO_{1/2}, a siloxane unit expressed by the formula: (CH₃)₂(CH₂=CH)SiO_{1/2}, a siloxane unit expressed by the formula: CH₃SiO_{3/2}, and a siloxane unit expressed by the formula: (CH₃)₂SiO_{2/2}.

Component (B) is a spherical inorganic light-diffusing agent for imparting light diffusivity to the present composition. Examples of component (B) include spherical silica fillers and spherical alumina fillers, with spherical alumina fillers being preferred. The average particle size of component (B) is within the range of 1 to 10 µm, and preferably within the range of 2 to 5 µm. The average particle size is, for example, the d₅₀ value measured by the Coulter method or the laser diffraction scattering method.

The amount of component (B) is within the range of 30 to 85 mass%, and preferably within the range of 50 to 85 mass% or within the range of 60 to 80 mass%, with respect to the total amount of component (A) to (C). This is because if the amount of component (B) is equal to or greater than the lower limit of the abovementioned range, the light dispersion of the resulting composition is improved, whereas if the amount is equal to or less than the upper limit of the abovementioned range, the light transmittance of the resulting composition is improved.

Component (C) is a silica filler that suppresses settling and separation of the abovementioned component (B) and stabilizes the properties of the present composition even when the present composition is stored over an extended period of time. Component (C) has a specific surface area measured by the BET method of 50 m²/g or more, and preferably 100 m²/g or more or 200 m²/g or more. On the other hand, the upper limit of the specific surface area is not particularly limited, but is preferably 500 m²/g or less, or 400 m²/g or less, in order to ensure dispersibility with component (A) and to sufficiently suppress settling and separation of component (B).

In the present composition, component (C) is a silica filler that has been surface-treated in advance with hexamethyldisilazane, or a silica filler that has been surface-treated with hexamethyldisilazane in the presence of a part or all of the aforementioned (A). Such a silica filler that has been surface-treated in advance with hexamethyldisilazane is available as RDX200 manufactured by Nippon Aerosil Co., Ltd. Furthermore, an untreated silica filler may be surface-treated in a hexamethyldisilazane solution and then added to component (A), or an untreated silica filler may be added to component (A) and then surface-treated in situ with hexamethyldisilazane.

The amount of component (C) is 0.1 to 5 mass%, and preferably within the range of 0.1 to 3 mass% or within the range of 0.1 to 1 mass%, with respect to the total amount of component (A) to (C). This is because if the amount of component (B) is equal to or greater than the lower limit of the abovementioned range, settling and separation of component (B) can be sufficiently suppressed, whereas if the amount is equal to or less than the upper limit of the abovementioned range, the light transmittance of the resulting composition is improved.

As an optional component for improving the affinity of component (B) with respect to component (A) and, when the present composition is coated on an optical member, improving the adhesion thereto, the present composition may include (D) an organosilane or organosiloxane having, in a molecule, at least one silicon atom-bonded alkoxy group and at least one silicon atom-bonded alkenyl group or at least one epoxy group-containing alkyl group.

Examples of organosilanes or organosiloxanes having at least one silicon atom-bonded alkoxy group and at least one silicon atom-bonded alkenyl group in a molecule of component (D) include:
organoalkoxysilanes expressed by the general formula:

   R²SiR¹ₐ(OR³)₃₋ₐ;

   and
organosiloxanes expressed by the general formula:

   R¹₂R²SiO(R¹₂SiO)ₙSiR¹ₐ(OR³)₃₋ₐ.

In the formula above, R¹ represents an alkyl group with 1 to 12 carbon atoms, and specific examples thereof include methyl groups, ethyl groups, propyl groups, butyl groups, pentyl groups, and hexyl groups, with methyl groups being preferred.

Furthermore, in the formula above, R² represents an alkenyl group with 2 to 12 carbon atoms, and specific examples thereof include vinyl groups, allyl groups, butenyl groups, pentenyl groups, and hexenyl groups, with vinyl groups being preferred.

Furthermore, in the formula above, R³ represents an alkyl group with 1 to 3 carbon atoms, and specific examples thereof include methyl groups, ethyl groups, and propyl groups, with methyl groups being preferred.

Furthermore, in the formula above, a represents 0, 1, or 2, and is preferably 0.

Furthermore, in the formula above, n represents an integer of 0 to 10, and preferably an integer of 0 to 5.

On the other hand, examples of organosilanes or organosiloxanes having at least one silicon atom-bonded alkoxy group and at least one epoxy group-containing alkyl group in a molecule of component (D) include: 3-glycidoxypropyltrimethoxysilane, 3-glycidoxypropylmethyldimethoxysilane, 3-glycidoxypropyltriethoxysilane, 3-glycidoxypropylmethyldiethoxysilane, 2-(2,3-epoxycyclohexyl)ethyltrimethoxysilane, 2-(2,3-epoxycyclohexyl)ethylmethyldimethoxysilane, and other organoalkoxysilanes; and
organopolysiloxanes as expressed by the average unit formula:

(R¹R²SiO_{2/2})_{b}(R⁴SiO_{3/2})_{c}(R¹₂SiO_{2/2})_{d}(R³O_{1/2})ₑ.

In the formula above, R¹ to R³ are the same as defined above.

Furthermore, in the formula above, R⁴ represents an epoxy group-containing alkyl group, and specific examples thereof include 3-glycidoxypropyl groups, 4-glycidoxybutyl groups, and other glycidoxyalkyl groups; and 2-(2,3-epoxycyclohexyl)ethyl groups, 3-(2,3-epoxycyclohexyl)propyl groups, and other epoxycyclohexylalkyl groups.

In the formula above, b, c, and d represent numbers that satisfy 0 < b ≤ 0.4, 0 < c ≤ 0.5, 0 < d ≤ 0.6, 0 < e ≤ 0.5, and b + c + d = 1.0.

The amount of component (D) is 0.1 to 5 mass%, and preferably within the range of 0.2 to 5 mass% or within the range of 0.2 to 3 mass%, with respect to the total amount of component (A) to (C). This is because if the amount of component (D) is equal to or greater than the lower limit of the above range, the affinity of component (B) with respect to component (A) is improved, which in turn contributes to suppressing settling and separation of component (B), whereas if the amount is equal to or less than the upper limit of the abovementioned range, the adhesion of the obtained composition to an optical member is improved.

The abovementioned composition can be made into a curable composition as a curing agent by further blending together with an organic peroxide, or an organohydrogenpolysiloxane having a silicon atom-bonded hydrogen atom and a platinum group metal-based hydrosilylation reaction catalyst. If cured by a hydrosilylation reaction, the aforementioned component (A) is an organopolysiloxane having at least two silicon atom-bonded alkenyl groups in a molecule, and the present composition further includes: (E) an organohydrogenpolysiloxane having at least two silicon atom-bonded hydrogen atoms in a molecule; and (F) a hydrosilylation reaction catalyst.

Component (E) is an organohydrogenpolysiloxane having at least two silicon atom-bonded hydrogen atoms in a molecule. Furthermore, examples of groups bonded to silicon atoms in component (E) include: methyl groups, ethyl groups, propyl groups, butyl groups, pentyl groups, hexyl groups, and other alkyl groups with 1 to 12 carbon atoms; cyclopentyl groups, cyclohexyl groups, and other cycloalkyl groups with 5 to 12 carbon atoms; phenyl groups, tolyl groups, xylyl groups, and other aryl groups with 6 to 12 carbon atoms; benzyl groups, phenethyl groups, and other aralkyl groups with 7 to 12 carbon atoms; and 3,3,3-trifluoropropyl groups, 3-chloropropyl groups, and other halogenated alkyl groups with 1 to 12 carbon atoms. Alkyl groups and aryl groups are preferred, and methyl groups and phenyl groups are particularly preferred. Note that in order to prevent self-crosslinking due to a hydrosilylation reaction, component (B) does not have a silicon atom-bonded alkenyl group, and in cases in which the present composition includes the abovementioned component (D), component (B) does not have a silicon atom-bonded alkoxy group or epoxy group-containing alkyl group. Furthermore, the viscosity of component (E) at 25°C is not limited, but is preferably in the range of 1 to 100,000 mPa·s or 1 to 5,000 mPa·s. The molecular structure of such component (F) is not limited, and examples thereof include linear, branched, linear with a partial branch, cyclic, and dendritic. Component (E) may be a homopolymer having these molecular structures, a copolymer including these molecular structures, or a mixture of thereof.

Examples of such organohydrogenpolysiloxanes of component (E) include: dimethylpolysiloxanes blocked with dimethylhydrogensiloxy groups at both molecular chain ends; dimethylsiloxane-methylhydrogensiloxane copolymers blocked with trimethylsiloxy groups at both molecular chain ends; dimethylsiloxane-methylhydrogensiloxane copolymers blocked with dimethylhydrogensiloxy groups at both molecular chain ends; and organosiloxane copolymers including a siloxane unit expressed by the formula (CH₃)₃SiO_{1/2}, a siloxane unit expressed by the formula (CH₃)₂HSiO_{1/2}, and a siloxane unit expressed by the formula SiO_{4/2}.

The amount of component (E) included is such that there are 0.1 to 10 mols or 0.5 to 5 mols of silicon atom-bonded hydrogen atoms in the present component with respect to 1 mol of the silicon atom-bonded alkenyl groups in component (A). This is because if the amount of component (E) is equal to or greater than the lower limit of the abovementioned range, the resulting composition is sufficiently cured, whereas if the amount equal to or less than the upper limit of the abovementioned range, the heat resistance of the light-diffusing material obtained by curing the composition is favorable.

Component (F) is a hydrosilylation reaction catalyst for accelerating the curing of the present composition, and examples thereof include platinum-based catalysts, rhodium-based catalysts, and palladium-based catalysts. In particular, a platinum-based catalyst is preferred as component (F) since the component is able to significantly accelerate the curing of the present composition. Examples of platinum-based catalysts include platinum fine powders, chloroplatinic acid, alcohol solutions of chloroplatinic acid, platinum-alkenyl siloxane complexes, platinum-olefin complexes, and platinum-carbonyl complexes, with platinum-alkenyl siloxane complexes being preferred.

The amount of component (F) is a catalytic amount, and is not particularly limited, but is preferably an amount such that the platinum-based metal is present in the range of 0.01 to 1,000 ppm, 0.1 to 500 ppm, 5 to 500 ppm, 0.1 to 300 ppm, or 5 to 300 ppm by mass with respect to component (A). This is because if the amount of component (F) is equal to or greater than the lower limit of the abovementioned range, curing of the present composition is promoted, whereas, if the amount is equal to or less than the upper limit of the abovementioned range, problems such as discoloration and the like of the obtained cured product are unlikely to occur.

The abovementioned composition may include (G) a hydrosilylation reaction inhibitor in order to adjust the curability and pot life. Examples of component (G) include 1-ethynyl-cyclohexane-1-ol, 2-methyl-3-butyne-2-ol, 3,5-dimethyl-1-hexyne-3-ol, 2-phenyl-3-butyne-2-ol, and other alkyne alcohols; 3-methyl-3-pentene-1-yne, 3,5-dimethyl-3-hexene-1-yne, and other ene-yne compounds; 1,3,5,7-tetramethyl-1,3,5,7-tetravinyl cyclotetrasiloxane, 1,3,5,7-tetramethyl-1,3,5,7-tetrahexenyl cyclotetrasiloxane, and other alkenyl group-containing siloxane oligomers; and hydrazine, triazone, phosphine, mercaptan, organic nitrogen compounds, acetylene alcohols, silylated acetylene alcohols, maleic acids, fumaric acids, ethylenic or aromatic unsaturated amides, ethylenic unsaturated isocyanates, olefinic silanes, olefinic siloxanes, unsaturated hydrocarbon monoesters and diesters, hydroperoxide, nitriles, and diaziridine. The amount of component (G) is not particularly limited, but is preferably within the range of 0.0001 to 5 parts by mass with respect to 100 parts by mass of the present composition.

An organic solvent, adhesion promoter, heat resistance additive, dye, pigment, or flame retardant may be added to the abovementioned composition as another optional component, provided that the objective of the present invention is not impaired.

In particular, the abovementioned composition can be diluted with an organic solvent and then coated onto an optical member to impart light diffusivity to the optical member. The organic solvent is not particularly limited, and examples thereof include: isopropyl alcohols, tert-butyl alcohols, cyclohexanols, cyclohexanones, methyl ethyl ketones, methyl isobutyl ketones, toluenes, xylenes, mesitylenes, 1,4-dioxanes, dibutyl ethers, anisoles, 4-methyl anisoles, ethyl benzenes, ethoxy benzenes, ethylene glycols, ethylene glycol dimethyl ethers, ethylene glycol diethyl ethers, 2-methoxy ethanols (ethylene glycol monomethyl ethers), diethylene glycol dimethyl ethers, diethylene glycol monomethyl ethers, ethyl acetates, butyl acetates, propyl propionates, 1-methoxy-2-propyl acetates, 1-ethoxy-2-propyl acetates, octamethyl cyclotetrasiloxanes, hexamethyl disiloxanes, and other non-halogen solvents; and trifluoromethyl benzenes, 1,2-bis (trifluoromethyl)benzenes, 1,3-bis (trifluoromethyl)benzenes, 1,4-bis (trifluoromethyl)benzenes, trifluoromethyl chlorobenzenes, trifluoromethyl fluorobenzenes, hydrofluoroethers, and other halogen solvents. The organic solvent can be used independently or as a mixture of two or more types thereof.

Furthermore, the coating method is not limited, and examples thereof include gravure coating, offset coating, offset gravure, roll coating using an offset transfer roll coater or the like, reverse roll coating, air knife coating, curtain coating using a curtain flow coater or the like, comma coating, Mayer bar coating, and spin coating.

### <Light-Diffusing Material>

Next, the light-diffusing material of the present invention will be described in detail. The light-diffusing material of the present invention is obtained by curing the abovementioned curable composition.

The light-diffusing material of the present invention preferably has a light transmittance of 40% or more at a wavelength of 550 nm when the material has a thickness (i.e., optical path length) of 30 µm. The light transmittance is a value measured for the wavelength range of visible light (full range) on a UV-Vis-NIR spectrophotometer with an integrated unit of 150 mm in diameter. Furthermore, this light-diffusing material preferably has light diffusivity such that, when the light scattering properties are measured using a scattering profiler or the like for measuring bidirectional transmittance distribution function equipped with a white light source (particularly a white LED formed by combining a blue LED and a yellow phosphor), the bidirectional transmittance distribution function thus obtained has a transmitted light intensity of 0.65 or more at a light receiving position inclined at 45 degrees from the straight transmitted light centered on the measurement sample, when the straight transmitted light intensity is set to 1. Note that the bidirectional transmittance distribution function (BTDF) is a function inherent in a transmission position which represents how much light component is transmitted and travels in each direction when light is incident from a direction in a position.

Furthermore, the hardness of the light-diffusing material of the present invention is not limited, but the Shore D Hardness thereof is preferably in the range of 30 to 80. The hardness can be adjusted by the amount of component (B) in the abovementioned composition and the crosslinking density caused by the hydrosilylation reaction of components (A) and (E). The light-diffusing material of the present invention is suitable as a flexible sheet-like light-diffusing material.

Furthermore, the light-diffusing material of the present invention may be in a state laminated on a surface of a film-like or sheet-like optical member. The thickness of the light-diffusing material in such a laminate body is not particularly limited, but in terms of the balance between light transmittance and light diffusivity, the film thickness is preferably within the range of 5 to 2000 µm, 100 to 1000 µm, 100 to 500 µm, or 20 to 300 µm.

### EXAMPLES

The light-diffusing silicone composition and light-diffusing material of the present invention will be described below in further detail with reference to examples. Note that the present invention is not limited to these examples. Furthermore, in the formula, Me, Vi, and Ep represent a methyl group, a vinyl group and a 3-glycidoxypropyl group, respectively. Furthermore, the viscosity in the examples is a value at 25°C measured using a digital display B-type rotational viscometer (VISMETRON VDA2 type manufactured by Shibaura Systems Co., Ltd.) in accordance with JIS K 7117-1:1999 "Plastics - Resins in the liquid state or as emulsions or dispersions - Determination of apparent viscosity by the Brookfield Test method". Furthermore, the thickness of the light-diffusing material was measured using a film thickness meter (DIGIMICRO MFC-101A manufactured by Nikon Corporation).

### <Examples 1 and 2 and Comparative Examples 1 and 2>

The following components were uniformly mixed to obtain the composition (parts by mass) shown in Table 1 to prepare light-diffusing silicone compositions. Specifically, component (c1), component (c3), or component (c4) was added to a mixture of components (a1), (a2), (a3), (d1), (d2), and (d3), and then the components (f1), (g1), and (b1) were uniformly added and mixed to prepare a light-diffusing silicone composition.

The following components were used as component (A).
(a1): An organopolysiloxane mixture having a viscosity of 21,000 mPa·s, the mixture including:
   36 mass% of vinyl group-containing organopolysiloxane, which is a white solid at 25°C and is expressed by the average unit formula:

      (Me₃SiO_{1/2})_{0.34}(Me₂ViSiO_{1/2})_{0.11}(SiO_{4/2})_{0.55};

      and
   64 mass% of dimethylpolysiloxane, which has a viscosity of 9,000 mPa·s and is expressed by the formula:

      Me₂ViSiO(Me₂SiO)₅₃₀SiMe₂Vi
(a2): Dimethylpolysiloxane, which has a viscosity of 2,000 mPa·s and is expressed by the formula:

   Me₂ViSiO(Me₂SiO)₃₁₀SiMe₂Vi
(a3): Dimethylpolysiloxane, which has a viscosity of 400 mPa·s and is expressed by the formula:

   Me₂ViSiO(Me₂SiO)₁₅₀SiMe₂Vi

The following component was used as component (B).
(b1): Spherical alumina filler having an average particle size of 4 µm (AZ4-10 manufactured by Nippon Steel Chemical & Material Co., Ltd.)

The following components were used as component (C).
(c1): Hydrophobic fumed silica microparticles having a specific surface area of 115 to 165 m²/g measured by the BET method and surface-treated with hexamethyldisilazane (RX200 manufactured by Nippon Aerosil Co., Ltd.)
(c2): Silica microparticles obtained by surface-treating fumed silica microparticles (Aerosil 200 manufactured by Nippon Aerosil Co., Ltd.) having a specific surface area of 200 m²/g measured by the BET method in component (A) with hexamethylsilazane (see Example 3 below for the preparation method)

The following components were used as a comparison of component (C).
(c3): Fumed silica microparticles having a BET specific surface area of 200 m²/g (Aerosil 200 manufactured by Nippon Aerosil Co., Ltd.)
(c4): Hydrophobic fumed silica microparticles surface-treated with dimethyldichlorosilane (Reolosil DM30S manufactured by Tokuyama Corporation)

The following components were used as component (D).
(d1) A dimethylsiloxane oligomer expressed by the formula:

   Me₂ViSiO(Me₂SiO)₃Si(OMe)₃
(d2): 3-glycidoxypropyl group-containing organopolysiloxane expressed by the average unit formula:

   (MeViSiO_{2/2})_{0.225}(EpSiO_{3/2})_{0.311}(Me₂SiO_{2/2})_{0.464}(MeO_{1/2})_{0.01-0.5}
(d3): 3-glycidoxypropylmethyldiethoxysilane

The following components were used as component (F).
(f1): 1,3-divinyltetramethyldisiloxane solution of a platinum 1,3-divinyltetramethyldisiloxane complex (amount of platinum: 4,000 ppm)

The following component was used as component (G).
(g1): 3,5-dimethyl-1-hexyn-3-ol

### <Example 3>

The abovementioned components were uniformly mixed to obtain the composition (parts by mass) shown in Table 1 to prepare a light-diffusing silicone composition. Specifically, 100 parts by mass of component (a2), 6 parts by mass of hexamethyldisilazane, and 40 parts by mass of fumed silica microparticles (Aerosil 200 manufactured by Nippon Aerosil Co., Ltd.) having a specific surface area of 200 m²/g as measured by the BET method were uniformly mixed, and then 2 parts by mass of water were added and further mixed. The mixture was heated and mixed at 170°C under reduced pressure for one hour, and then cooled to ambient temperature to prepare a silicone base. Note that the silica microparticles in the silicone base that had been surface-treated with hexamethylsilazane were used as component (c2). Next, component (a1), the remaining components (a2), (a3), (d1), (d2), and (d3) were added to this silicone base, and then components (f1), (g1), and (b1) were added and mixed uniformly to prepare a light-diffusing silicone composition.

### <Comparative Example 3>

The abovementioned components were uniformly mixed to obtain the composition (parts by mass) shown in Table 1 to prepare a light-diffusing silicone composition. Specifically, components (f1), (g1), and (b1) were added to a mixture of the components (a1), (a2), (a3), (d1), (d2), and (d3), and mixed uniformly to prepare a light-diffusing silicone composition.

### <Appearance of Light-Diffusing Silicone Composition>

The light-diffusing silicone compositions of Examples 1 to 3 and Comparative Examples 1 to 3 were placed in a transparent glass bottle and allowed to stand at 25°C. The composition surface was observed to see if any settling occurred after a prescribed period of time due to settling and separating of component (b1), and evaluated as follows.
∘: No transparent layer was observed on the surface of the composition.
△: A slight transparent layer was observed on the surface of the composition.
×: A transparent layer was observed on the surface of the composition.

### <Viscosity of Light-Diffusing Silicone Composition>

The light-diffusing silicone compositions of Examples 1 to 3 and Comparative Examples 1 to 3 were placed in a transparent glass bottle and allowed to stand at 25°C. After a prescribed period of time, the composition near the surface was sampled with a spatula and the viscosity thereof was measured using an MCR301 rheometer manufactured by Anton Paar. The results are depicted in Table 1.

**[Table 1]**

| | | | EXAMPLES | | | Comparative Examples | | |
|---|---|---|---|---|---|---|---|---|
| | | | 1 | 2 | 3 | 1 | 2 | 3 |
| Composition of light-diffusing silicone composition (parts by mass) | (A) | (a1) | 18.57 | 18.48 | 18.58 | 18.57 | 18.57 | 18.66 |
| | | (a2) | 2.14 | 2.13 | 2.15 | 2.14 | 2.14 | 2.15 |
| | | (a3) | 2.71 | 2.70 | 2.71 | 2.71 | 2.71 | 2.73 |
| | (B) | (b1) | 74.40 | 74.02 | 74.40 | 74.40 | 74.40 | 74.78 |
| | (C) | (c1) | 0.50 | 1.00 | 0 | 0 | 0 | 0 |
| | | (c2) | 0 | 0 | 0.50 | 0 | 0 | 0 |
| | | (c3) | 0 | 0 | 0 | 0.50 | 0 | 0 |
| | | (c4) | 0 | 0 | 0 | 0 | 0.50 | 0 |
| | (D) | (d1) | 0.23 | 0.23 | 0.23 | 0.23 | 0.23 | 0.23 |
| | | (d2) | 0.12 | 0.12 | 0.11 | 0.12 | 0.12 | 0.12 |
| | | (d3) | 0.11 | 0.11 | 0.11 | 0.11 | 0.11 | 0.11 |
| | (F) | (f1) | 0.03 | 0.03 | 0.03 | 0.03 | 0.03 | 0.03 |
| | (G) | (g1) | 0.02 | 0.02 | 0.02 | 0.02 | 0.02 | 0.02 |
| Settling and separation of component (B) | | After 1 month | ○ | ○ | ○ | × | × | × |
| | | After 12 months | Δ | ○ | Δ | × | × | × |
| Viscosity (Pa·s) | | Initial | 293 | 301 | 431 | 216 | 153 | 209 |
| | | After 12 months | 319 | 279 | 356 | -^{*} | -^{*} | -^{*} |

| | | | | | | | | |
|---|---|---|---|---|---|---|---|---|
| * Viscosity cannot be measured due to non-uniformity | | | | | | | | |

The results in Table 1 indicate that, in the light-diffusing silicone compositions of Examples 1 to 3, little settling or separation of component (B) occurred when stored for long periods of time, whereas in the light-diffusing silicone composition of Comparative Example 3, settling and separation of component (B) was observed even after storage for one month, indicating inferior stability.

### <Examples 4 to 6 and Comparative Examples 4 to 6>

Curable light-diffusing silicone compositions were prepared by uniformly mixing the light-diffusing silicone compositions prepared in Examples 1 to 3 and Comparative Examples 1 to 3 with component (E) described below in the compositions (parts by mass) shown in Table 2. Note that the amount of component (E) added is such that there is 1 mol of silicon atom-bonded hydrogen atoms in component (E) with respect to 1 mol of the silicon atom-bonded alkenyl groups in component (A).

The following component was used as component (E).
(e1): Methylhydrogenpolysiloxane blocked with trimethylsiloxy groups at both molecular chain ends, which is expressed by the formula:

Me₃SiO(MeHSiO)₅₀SiMe₃

### [Preparation of 30 µm-thick Cured Product]

9 g of propyl propionate was added to each of 60 g of the curable light-diffusing silicone compositions of Examples 4 to 6 and Comparative Examples 4 to 6, and the mixtures were stirred uniformly while degassing to prepare a coating agent. The obtained coating agent was coated onto a D 263 T eco glass (77 mm × 77 mm × 0.2 mm) manufactured by Schott using a 75 µm thick applicator, and then heated in an oven at 150° C for one hour to prepare a glass integrated product made of a cured product having a thickness of 30 µm.

### [Transparency of Cured Product]

A 150 mmφ integrating sphere unit was attached to the abovementioned glass integrated product, and the total light transmittance was measured using a UV-Vis-NIR spectrophotometer (V-770 manufactured by JASCO Corporation). When this value was 45% or more, the transmittance was deemed to be favorable, and this was indicated in Table 2 with the symbol "⊚".

### [Heat Resistance of Cured Product]

The abovementioned glass integrated product was heated at 160 to 200°C for three minutes using a reflow device RDT-250C manufactured by Malcom, then rapidly heated to 260°C or higher and maintained for 10 seconds, and then air-cooled to 150°C. After repeating this operation three times, the rate of change in the transmittance at a wavelength of 550 nm relative to the initial value was determined. A change of less than 0.5% was indicated by the symbol "⊚", indicating favorable heat resistance, and a change of 0.5% or more was indicated by the symbol " ×", indicating inferior heat resistance.

### <Light-Diffusibility of Cured Product>

Light transmission and scattering of the abovementioned glass integrated product was measured using a Genesia Gonio/Far Field Profiler manufactured by Genesia. Using the bidirectional transmittance distribution function at 45-degrees, if the transmitted light intensity of white light incident orthogonal to the surface of a measurement sample, or in other words the linear transmitted light intensity, is 1, the light diffusivity is considered favorable and indicated by "⊚" if the received light intensity at a position where the light-receiving unit is inclined 45 degrees from the incident light axis centered on the measurement sample is 0.65 or more.

### <Shore D Hardness of Cured Product>

The curable light-diffusing silicone compositions of Examples 4 to 6 and Comparative Examples 4 to 6 were degassed, then heated in a press at 125°C for 15 minutes using a metal die having a width of 10 mm, a length of 50 mm, and a thickness of 2 mm, and then heated in an oven at 150°C for one hour to prepare cured products. Three sheets of this cured product were stacked together and the Shore D Hardness thereof was measured using an automatic rubber hardness tester P2 manufactured by Kobunshi Keiki Co., Ltd.

**[Table 2]**

| | | | EXAMPLES | | | Comparative Examples | | |
|---|---|---|---|---|---|---|---|---|
| | | | 4 | 5 | 6 | 4 | 5 | 6 |
| Composition of curable light-diffusing silicone composition (parts by mass) | (A) | (a1) | 18.57 | 18.48 | 18.58 | 18.57 | 18.57 | 18.66 |
| | | (a2) | 2.14 | 2.13 | 2.15 | 2.14 | 2.14 | 2.15 |
| | | (a3) | 2.71 | 2.70 | 2.71 | 2.71 | 2.71 | 2.73 |
| | (B) | (b1) | 74.40 | 74.02 | 74.40 | 74.40 | 74.40 | 74.78 |
| | (C) | (c1) | 0.50 | 1.00 | 0 | 0 | 0 | 0 |
| | | (c2) | 0 | 0 | 0.50 | 0 | 0 | 0 |
| | | (c3) | 0 | 0 | 0 | 0.50 | 0 | 0 |
| | | (c4) | 0 | 0 | 0 | 0 | 0.50 | 0 |
| | (D) | (d1) | 0.23 | 0.23 | 0.23 | 0.23 | 0.23 | 0.23 |
| | | (d2) | 0.12 | 0.12 | 0.11 | 0.12 | 0.12 | 0.12 |
| | | (d3) | 0.11 | 0.11 | 0.11 | 0.11 | 0.11 | 0.11 |
| | (E) | (e1) | 1.17 | 1.17 | 1.17 | 1.17 | 1.17 | 1.17 |
| | (F) | (f1) | 0.03 | 0.03 | 0.03 | 0.03 | 0.03 | 0.03 |
| | (G) | (g1) | 0.02 | 0.02 | 0.02 | 0.02 | 0.02 | 0.02 |
| Thickness of cured product (µm) | | | 30 | 30 | 30 | 31 | 31 | 30 |
| Total light transmittance (%) | | | 48.2 | 47.7 | 47.6 | 48.2 | 48.9 | 48.3 |
| Transparency | | | ⊚ | ⊚ | ⊚ | ⊚ | ⊚ | ⊚ |
| Percentage of change in transmittance after reflow (%) | | | -0.25 | -0.02 | -0.38 | -0.87 | -0.74 | -0.11 |
| Heat resistance | | | ⊚ | ⊚ | ⊚ | × | × | ⊚ |
| Light diffusion property value | | | 0.678 | 0.678 | 0.679 | 0.678 | 0.679 | 0.677 |
| Light diffusivity | | | ⊚ | ⊚ | ⊚ | ⊚ | ⊚ | ⊚ |
| Shore D Hardness | | | 44 | 45 | 44 | 44 | 44 | 50 |

### INDUSTRIAL APPLICABILITY

The light-diffusing silicone composition of the present invention suppresses settling and separation of a light-diffusing spherical filler over an extended period of time, and when an organopolysiloxane has a silicon atom-bonded alkenyl group, the composition can be cured with an organohydrogenpolysiloxane in the presence of a hydrosilylation reaction catalyst, and upon curing forms a light-diffusing material that has excellent light diffusivity and heat resistance, making the composition suitable as a coating agent for forming a light-diffusing material for lighting and LCD backlights.

## Claims

1. A light-diffusing silicone composition, comprising:
(A) an organopolysiloxane having a viscosity at 25°C of 100 to 1,000,000 mPa·s;
(B) a spherical inorganic light-diffusing agent having an average particle size of 1 to 10 µm; and
(C) a silica filler having a specific surface area as measured by the BET method of at least 50 m²/g, wherein
with respect to the total amount of the aforementioned components (A) to (C), the amount of the aforementioned component (B) is 30 to 85 mass% of the present composition and the amount of the aforementioned component (C) is 0.1 to 5 mass% of the present composition, and the aforementioned component (C) is a silica filler which has been surface-treated in advance with hexamethyldisilazane, or a silica filler which has been surface-treated with hexamethyldisilazane in the presence of a part or all of the aforementioned component (A).

2. The light-diffusing silicone composition according to claim 1, wherein component (B) is a spherical alumina filler.

3. The light-diffusing silicone composition according to claim 1, further comprising:
(D) an organosilane or organosiloxane having, in a molecule, at least one silicon atom-bonded alkoxy group and at least one silicon atom-bonded alkenyl group or at least one epoxy group-containing alkyl group at an amount of 0.1 to 5 mass% with respect to the total amount of the aforementioned components (A) to (C).

4. The light-diffusing silicone composition according to claim 1, wherein the aforementioned component (A) is an organopolysiloxane having at least two silicon atom-bonded alkenyl groups in a molecule,
the light-diffusing silicone composition further comprising:
(E) an organohydrogenpolysiloxane having at least two silicon atom-bonded hydrogen atoms in a molecule, at an amount such that there are 0.1 to 10 mols of silicon atom-bonded hydrogen atoms in the present component with respect to 1 mol of alkenyl groups in the aforementioned component (A); and
(F) a catalytic amount of a hydrosilylation reaction catalyst.

5. A light-diffusing material obtained by curing the light-diffusing silicone composition according to claim 4.

6. The light-diffusing material according to claim 5, which has a light transmittance of 40% or more at a wavelength of 550 nm when the material has a thickness of 30 µm.
